# EUROPÄISCHE PATENTSCHRIFT

(11) **EP 1 049 555 B1**
(45) Veröffentlichungstag und Bekanntmachung des Hinweises auf die Patenterteilung: **07.08.2002**
(21) Anmeldenummer: 99960928.2
(22) Anmeldetag: 16.11.1999
(51) Int. Cl.: B23B 31/20

(54) **SPANNZANGE ZUM HALTEN VON STANGENMATERIAL IN DREHMASCHINEN**
COLLET CHUCK FOR HOLDING BARS IN LATHES
PINCE DE SERRAGE DESTINEE A RETENIR DES BARRES DANS DES TOURS

(30) Priorität: 20.11.1998 DE 19853525
(43) Veröffentlichungstag der Anmeldung: 08.11.2000
(73) Patentinhaber: Schlichting, Dieter, 23669 Timmendorfer Strand (DE)
(72) Erfinder: Schlichting, Dieter, 23669 Timmendorfer Strand (DE)
(74) Vertreter: Wilcken, Thomas, Dipl.-Ing.
(86) Internationale Anmeldenummer: DE9903672
(87) Internationale Veröffentlichungsnummer: WO0030793

(56) Entgegenhaltungen:
- US-A- 2 345 706
- US-A- 5 324 050

## Beschreibung

Die Erfindung geht aus von einer Zange nach dem Oberbegriff des Anspruchs 1 (siehe US-A- 2 346 706).

Der Aufbau einer derartigen Zange, insbesondere wenn die Zange als Führungszange konstruiert ist, allgemein bekannt. Zur Einstellung in ihre Arbeitsposition, in welcher das mittels einer Drehmaschine zu bearbeitende Stangenmaterial durch die zentrale Öffnung der Zange gleitend hindurchgeführt wird. weisen die Backenelemente der Zange an ihrem inneren Ende in der Regel eine äußere Nutausbildung auf, in die eine Betätigungseinrichtung eingreift, um die Backenelemente, die mit ihrer äußeren Teilkegelstumpffläche in bekannter Weise an einer gemeinsamen Innenkegelfläche anliegen, in ihre Arbeitsposition einzustellen. In dieser Arbeitsposition der Backenelemente kann das zu bearbeitende Stangenmaterial durch die Zange hindurch in seine Bearbeitungsstellung geschoben werden. Das Problem einer solchen Zange Führungszange besteht darin, daß, wie man festgestellt hat, insbesondere bei hochfestem und im Durchmesser ungleichmäßigen Stangenmaterialien eine einwandfreie Führung des Stangenmaterials in der Zange zwecks Erzielung einer wirtschaftlichen und technisch einwandfreien Herstellung eines Werkstückes aus dem Stangenmaterial nicht gegeben ist. weil sich die Backenelemente der Zange nicht auf ganzer Länge parallel zur zentralen Mittelachse der Zange bewegen, obwohl sie an der gemeinsamen Innenkegelfläche geführt werden. und lose Backenelemente sind, sondern sich an ihrem anderen Ende, das der genannten äußeren Nutausbildung gegenüberliegt, also an dem Arbeitsende der Zange, dieser zentralen Mittelachse zuerst nähern. Dadurch wird bei Verwendung als Führungszange keine gleichmäßige Führungsanlage der Backenelemente entlang ihrer gesamten Länge an dem zu bearbeitenden Stangenmaterial erreicht.

Diese Nachteile wiederum führen zu Rattermarken an dem herzustellenden Werkstück, insbesondere wenn dabei zur Erzielung kurzer Bearbeitungszeiten hohe Drehzahlen verwendet werden und das Werkstück aus hochfestem Material, z.B. aus Titan oder Titanlegierungen, besteht. Nachteilig kommt hierbei hinzu, daß das meistens runde Stangenmaterial selbst dann entlang seiner Länge einen ungleichen Durchmesser aufweist, wenn es sich dabei um rundgeschliffenes Material handelt, also um Material, das an sich geringe Durchmessertoleranzen aufweist.

Des weiteren sind zur Bearbeitung von Stangenmaterial Zangen mit einem zentralen Durchgang für das Stangenmaterial bekannt (US- Patent 2 346 706), wobei diese Zange metallene, umfangsmäßig verteilte, plattenförmige Segmentteile aufweisen, die wiederum mittels eines zwischen ihnen vorgesehenen, elastischen Gummimaterials, das an den Segmentteilen anvulkanisiert ist, miteinander verbunden sind. Die Segmentteile stehen mit ihrer schmalen Außenfläche gegenüber dem elastischen Gummimaterial vor und bilden mit dieser Fläche insgesamt streifenförmige Anlageflächen, die zum Schließen der Zange an einer gemeinsamen Innenkegelfläche einer Hülse zur Anlage kommen. Die axialen Innenflächen der metallischen Segmentteile begrenzen das zentrale Durchgangsloch der Zange, und alle Innenflächen kommen an dem zu bearbeitenden Stangenmaterial zur Anlage. Bei dieser Zange hat sich jedoch hcrausgestellt, daß sich die metallenen Segmentteile parallel zur zentralen Mittelachse der Zange verkanten, sich also schrägstellen, wenn die Zange in der Funktion als Führungszange für das zu bearbeitende Stangenmaterial mit hoher Drehzahl betrieben wird. Daraus resultiert wiederum eine ungenügende Führung des Stangenmaterials mit im wesentlichen den gleichen, vorstehend beschriebenen Nachteilen einer Zange mit losen Backenelementen.

Die Aufgabe der Erfindung besteht somit in der Verbesserung einer Zange der einleitend angeführten Art zum insbesondere Führen von Stangenmaterial in Drehmaschinen, die eine gleichmäßige Anlage ihrer Backenelemente entlang ihrer gesamten Länge an dem zu bearbeitenden Stangenmaterial erlaubt, um eine wirtschaftliche Fertigung von Werkstücken aus dem Stangenmaterial und eine einwandfreie technische Qualität der herzustellenden Werkstücke auch bei hohen Drehzahlen und ungenügender Ausgangsqualität des Stangenmaterials zu erzielen.

Die Lösung der Aufgabe ist in dem Patentanspruch 1 angegeben.

Durch diese Lösung wird überraschenderweise erreicht, daß sich die Backenelemente der Zange auch im Fall der Verwendung als Führungszange entlang ihrer gesamten Backenlänge gleichmäßig radial, also achsparallel zu dem zu bearbeitenden Stangematerial genau einstellen lassen. Es ist davon auszugehen, daß sich die Backenelemente zwecks Einstellung in ihre Arbeitslage auf ihrer gesamten Länge achsparallel zur zentralen Mittelachse der Zange bewegen, wenn die Backenelemente durch eine übliche Zugeinrichtung, die in die für die Betätigung der Zange vorgesehene Nutausbildung der Zange eingreift, in die Innenkegelfläche einer die Zange haltenden Hülse hineingezogen werden, wobei alle Backenelemente ihre schließlich eingenommene Arbeitslage radial zur zentralen Mittelachse der Zange bcibehalten. Diese auf der gesamten Länge der Backenelemente gleichmäßig stattfindende, radiale Einstellbewegung ist insofern überraschend, als daß nur eine verhältnismäßig kleine Stützfläche der Backenelemente und nicht deren gesamte äußere Teilkegelstumpffläche an der erwähnten Innenkegelfläche anliegt. Diese kleine Stützfläche beträgt im allgemeinen nur etwa 5 bis 15 % der äußeren Teilkegelstumpffläche ihres Backenelementes und ist vorzugsweise in einem zentralen Bereich der Teilkegelstumpffläche jedes Backenelementes vorgesehen.

In einer vorteilhaften Ausführungsform der Erfindung erstreckt sich die kleine Stützfläche entlang einer geraden Linie, die auf der Teilkegelstumpffläche jedes Backenelementes in dessen Umfangsmitte axial längsverlaufend gedacht ist, wobei die Stützfläche vorteilhaft eine Rippenform aufweist. Eine solche Rippe kann einfach, z. B. in der Längsmitte jedes Backenelements, oder mehrfach, z. B. mehrere Rippen entlang der geraden Linie, vorhanden sein und mit dem übrigen Backenelement ein einstückiges Bauteil bilden oder als gesondertes Bauteil mit dem übrigen Backenelement fest verbunden sein. Im Fall der Anordnung einer einzigen Rippe kann diese sich auch im wesentlichen entlang der gesamten Axiallänge jedes Backenelementes erstrecken.

Die Erfindung ist nachstehend anhand zweier, in den anliegenden Zeichnungen dargestellter Ausführungsbeispiele näher erläutert. Es zeigen:
- Fig. 1: ein erstes Ausführungsbeispiel im Axialschnitt,
- Fig. 2: einen Querschnitt nach der Linie II - II in Fig. 1,
- Fig. 3: einen Axialschnitt nach der Linie III - III in Fig. 2,
- Fig. 4.: eine Aufsicht gemäß dem Pfeil A in Fig. 3,
- Fig. 5 u. 6: alternative Ausführungsformen zu derjenigen in Fig. 3,
- Fig. 7: ein zweites Ausführungsbeispiel in teilweisem Axialschnitt.

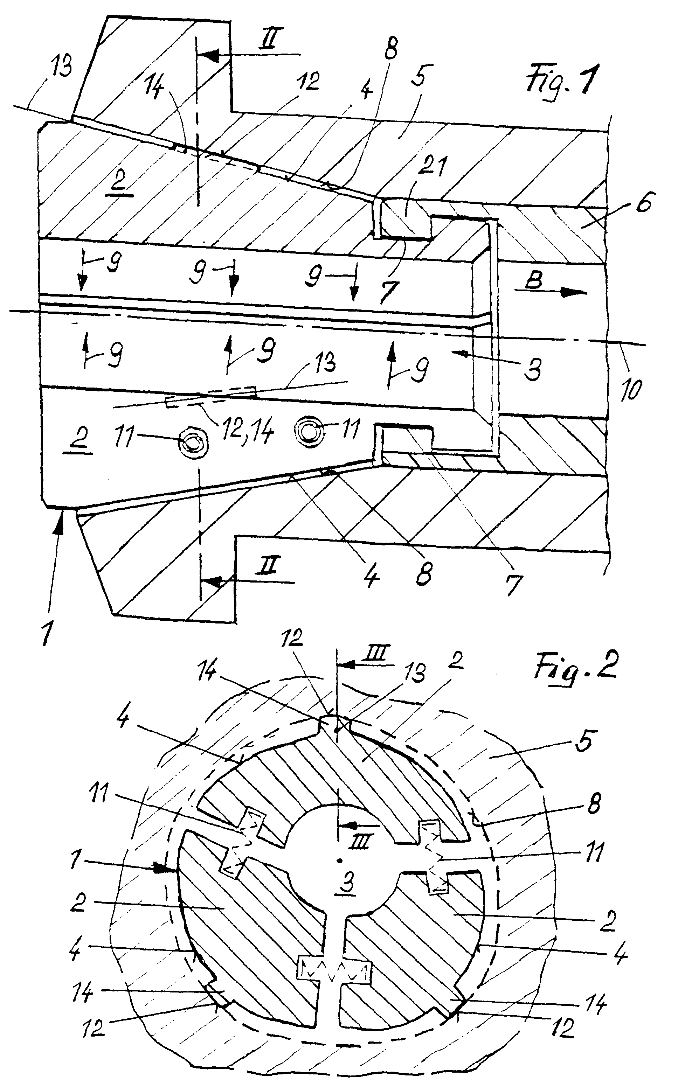

Nach den Fig. 1 und 2 umfaßt die allgemein mit 1 bezeichnete Zange vorzugsweise drei Backenelemente 2, deren Basisaufbau bekannt ist. Sie weisen also einen sektorförmigen Querschnitt auf, sind als Losteile ausgestaltet und bilden zusammen einen rohrförmigen Körper, so daß ein zentraler Durchgang 3 gebildet ist, durch den in Drehmaschinen zu bearbeitendes Stangenmaterial axial in seine Arbeitsposition geführt wird. Auf ihrer Außenseite weisen die Backenelemente 2 die übliche Teilkegelstumpffläche 4 auf. Die Zange 1, d. h. die drei losen Backenelemente 2, wird bzw. werden in bekannter Weise in einer mitdrehenden Traghülse 5 gehalten und in dieser Hülse mittels beispielsweise einer Betätigungshülse 6 axial eingestellt. Das sich in der Hülse 5 befindende Ende der Backenelemente 2 weist eine Betätigungsausbildung 7 auf, beispielsweise in Form einer Betätigungsnut, in die die axial einstellbare Betätigungshülse 6 eingreift, um die Backenelemente axial zu verstellen. Die mitdrehende Hülse 5 weist eine innere Kegelstumpffläche 8 auf, an der die Backenelemente 3 erfindungsgemäß anliegen. Wenn die Betätigungshülse 6 gemäß dem Pfeil B verstellt wird, bewegen sich die Backenelemente 2 gemäß den Pfeilen 9 achsparallel zur Mittelachse 10 der Zange 1 und werden so in an sich bekannter Weise in ihre Führungsstellung oder auch Spannstellung eingestellt. Die losen Backenelemente 2 selbst sind bei ihrer Anlage an der inneren Kegelstumpffläche 8 umfangsmäßig voneinander beabstandet, was zum Beispiel mittels Federelementen 11 erreicht wird, die in entsprechende Bohrungen der Backenelemente eingreifen.

Um eine genaue achsparallele Einstellung der Backenelemente 2 auf ihrer gesamten Länge zu der zentralen Längsachse 10 der Zange 1 zu erhalten, ist jedes Backenelement im Bereich seiner Teilkegelstumpffläche 4 erfindungsgemäß mit wenigstens einer von dieser Fläche 4 nach außen vorstehenden, kleinen Stützfläche 12 versehen, welche an der Kegelstumpffläche 8 der mitdrehenden Traghülse 5 anliegt und als kraftübertragende Einstellausbildung für das radiale Einstellen der Backenelemente 2 in ihre Arbeitsposition dient.

Wie es am besten aus Fig. 2 zu sehen ist, ist die vorstehende Stützfläche 12 im Bereich einer geraden Linie 13 vorgesehen, die auf der Teilkegelstumpffläche 4 jedes Backenelementes 2 in dessen Umfangsmitte längsverlaufend gedacht ist. Da die Kegelstumpffläche 8 der Hülse 5 eine kreisbogenförmige Krümmung aufweist, ist die an dieser Kegelstumpffläche 8 anliegende Stützfläche 12 der Backenelemente 2 selbstverständlich an die Krümmung der inneren Kegelstumpffläche 8 angepaßt. Hierbei kann auch so vorgegangen werden, daß die Stützfläche 12 eine stärkere Querkrümmung aufweist, so daß sie mit einer Anlagelinie an der inneren Kegelstumpfflache 8 der Hülse 5 anliegt.

Vorteilhaft ist die vorstehende Stützfläche 12 jedes Backenelementes 2 im Bereich der halben Kegelflächenlänge jedes Backenelementes vorgesehen, wie es mit Ausnahme von Fig. 2 in allen anderen Figuren klar zu erkennen ist. Es ist jedoch auch möglich, daß die Stützfläche 12 an einer anderen Stelle entlang der gedachten Linie 13 vorgesehen ist, zum Beispiel näher zu dem einen oder zu dem anderen Ende jedes Backenelementes 2. Des weiteren ist es auch möglich, daß entlang der gedachten Linie 13 zwei oder mehr Stützflächen 12 vorgesehen sein können. Ferner ist es auch möglich, daß sich die Stützfläche 12 im wesentlichen entlang der gesamten Länge der gedachten, mittigen geraden Linie 13 erstreckt, wobei sie in diesem Fall als sehr schmale Fläche ausgebildet ist, wie es in Fig. 4 gut zu erkennen ist.

Die oder jede vorstehende Stützfläche 12 kann eine beliebige Form aufweisen. Eine vorzugsweise Form besteht in einer länglichen Form, wie sie insbesondere aus Fig. 4 gut zu erkennen ist, wobei die Enden der länglichen Form abgerundet sein können. Es ist aber auch möglich, eine Kreisform anzuwendenden, wie es sich in Verbindung mit den nachstehend beschriebenen Ausführungsformen nach den Figuren 5 und 6 ergibt. Ferner ist es möglich, eine Polygonform anzuwenden, zum Beispiel als Quadrat, Sechseck oder dergleichen.

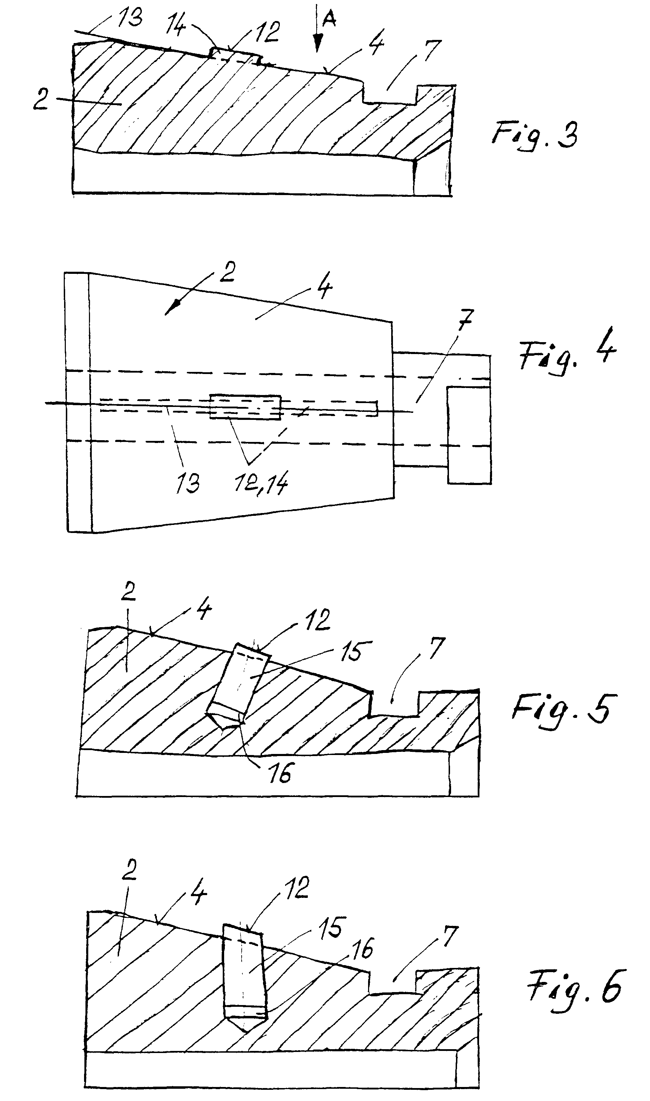

Die oder jede von der Teilkegelstumpffläche 4 jedes Backenelementes 2 vorstehende Stützfläche 12 kann dadurch ausgebildet sein, daß ein Teil von dem Backenelement 2 gegenüber der Teilkegelstumpffläche 4 radial nach außen vorsteht, wie es beispielsweise die Fig. 1, 2 und 3 zeigen, so daß das vorstehende Teil 14 und das übrige Backenelement 2 jeweils ein einstückiges Bauteil bilden.

Gemäß den Figuren 5 und 6 kann jedoch auch so vorgegangen sein, daß die oder jede vorstehende Stützfläche 12 jedes Backenelementes 2 an einem gesonderten Bauteil 15 ausgebildet ist, das mit dem Backenelement festverbunden ist. Hierzu kann das Backenelement mit einer Vertiefung 16 in Form einer Bohrung oder auch Nut versehen sein, in welche das Bauteil 15 in Form eines Stiftes bzw. Rippenkörpers eingepreßt oder auf andere Weise verbunden ist. Das stiftförmige Bauteil 15 kann eine rechtwinklige Lage zur Teilkegelstumpffläche 4 aufweisen, wie es Fig. 5 zeigt. In diesem Falle wird die vorstehende Stützfläche 12 im allgemeinen eine Kreisform aufweisen. Wenn das stiftförmige Bauteil 15 gemäß Fig. 6 keine rechtwinklige Lage zu der Teilkegelstumpffläche 4 des Backenelementes 2 aufweist, wird die vorstehende Stützfläche 12 im allgemeinen eine leichte Ellipsenform aufweisen.

In einer weiteren Alternative kann auch so vorgegangen sein, daß das gesonderte Bauteil 15 nicht in eine Vertiefung des Backenelementes 2 hineinragt, sondern als Bauteil auf der Teilkegelstumpffläche 4 des Backenelementes 2 befestigt ist, zum Beispiel durch Löten oder Schweißen.

Die Stützfläche 12 jedes Backenelemtes steht etwa 0.3 bis 0.7 mm gegenüber der zugehörigen Teilkegelstumpffläche 4 vor. Die Länge der jeweiligen Stützfläche kann im Fall der kleinen Rippenform etwa 5 bis 20 mm betragen und im Fall der Stiftform etwa 3 bis 7 mm im Durchmesser.

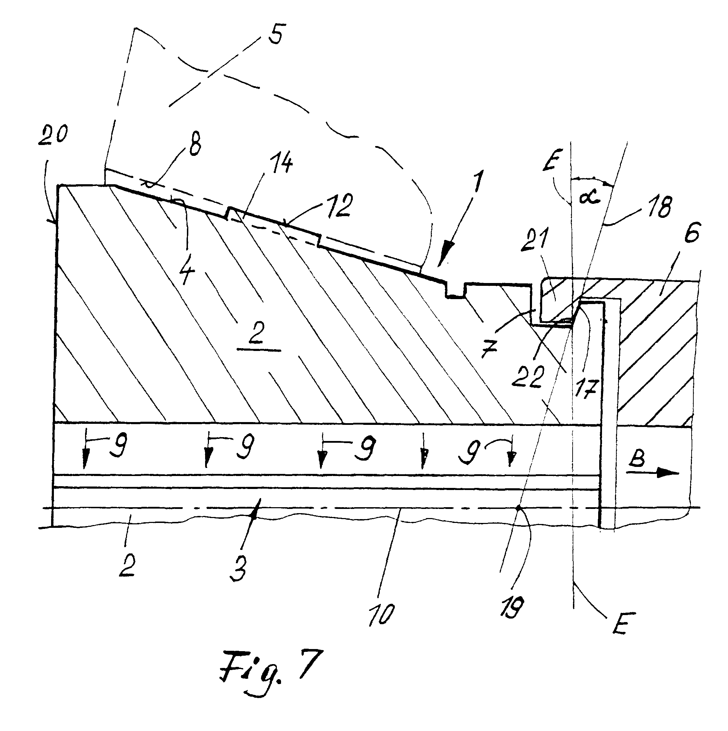

Um die genaue radiale Bewegung der Backenelemente 2 gemäß den Pfeilen 9 aufgrund der axialen Zugbewegung der Betätigungshülse 6 noch weiter zu verbessern, weist das zweite Ausführungsbeispiel nach Fig. 7 neben seiner Ausbildung mit den vorstehend beschriebenen vorstehenden Stützflächen 12 zusätzlich noch eine besondere Ausbildung der umfangsmäßigen Nuten 7 der Backenelemente 2 an ihrem Innenende auf. Gemäß Fig. 7 weist jede Nut 7 der Backenelemente 2 eine axial äußere, d. h. in Fig. 7 recht befindliche, geneigte Seitenringfläche 17 auf. Die Neigung der Seitenringfläche 17 jedes Backenelementes 2 ist durch eine Neigungslinie 18 angedeutet, die in bezug auf eine Ebene E, die senkrecht zu der Drehachse 10 der Backenelemente 2 verläuft, derart geneigt verläuft, daß sie die Drehachse vor der senkrechten Ebene E bei 19 schneidet, wenn man diese Ebene von der Arbeitsseite 20 der Zange 1 her betrachtet. Der zwischen der Ebene E und der Neigungslinie 18 anwendbare Winkelbereich α für die Neigung der jeweiligen Seitenringfläche 17 der Nut 7 beträgt im allgemeinen 10 bis 30 °. Ein bevorzugter Winkelbereich für die Neigung der Seitenringfläche 17 jeder Betätigungsnut 7 beträgt 10 bis 20°. Ein noch weiterer, bevorzugter Winkelbereich beträgt 12 bis 15 ° für den Winkel α.

Es ist klar, daß auch die Betätigungshülse 6 mit ihren in die Betätigungsnut 7 jedes Backenelementes 2 eingreifenden Klauen 21 in bezug auf die vorstehend angegebene Winkelwerte entsprechend ausgebildet sein muß. Somit weisen die Klauen 21 ebenfalls eine geneigte Seitenringfläche 22 auf, die an der Seitenringfläche 17 der jeweiligen Betätigungsnut 7 flächig anliegt. Als Konuswinkel für die Teilkegelstumpffläche 4 der Backenelemente 2 werden die üblichen Winkelwerte gewählt.

Die Funktion der vorstehend beschriebenen Zange 1 ist im Prinzip allgemein bekannt, so daß die nachstehende Funktionserläuterung sehr kurz gehalten ist. Wenn ein Stangenmaterial in den durch die Backenelemente 2 gebildeten Durchgang 3 eingeschoben wird, befinden sich die Backenelemente in ihrer größten Offenstellung. Wenn sich das Stangenmaterial, das durch die Betätigungshülse 6 und den Durchgang 3 hindurch erstreckt, in seiner Bearbeitungsposition befindet, wird durch die Betätigungshülse 6 eine Schließkraft gemäß dem Pfeil B auf die Backenelemente 2 der Zange 1 ausgeübt. Die Backenelemente bewegen sich dabei gemäß den Pfeilen 9 radial zu dem zu bearbeitenden Stangenmaterial, und zwar aufgrund der vorstehenden Stützflächen 12 gleichmäßig entlang ihrer gesamten Länge, wodurch sich der Durchgang 3 der Zange 1 im Durchmesser verkleinert. In der Anwendung als Führungszange legen sich die Backenelemente 2 jedoch nicht reibschlüssig an dem zu bearbeitenden Stangenmaterial an, sondern erlauben in ihrer einmal eingestellten Arbeitsposition eine axiales Durchschieben des Stangenmaterials in eine vorbestimmte Bearbeitungsposition. Durch die genaue achsparallele Führungslage der Backenelemente 2 zur zentralen Drehachse 10 der Zange 1 kann das Stangenmaterial insbesondere auch bei hohen Bearbeitungsdrehzahlen und/oder ungenügender Durchmesserqualität des Stangenmaterials hochgenau und vibrationsarm geführt werden. Natürlich ist es auch möglich, die vorstehend beschriebene Zange als Spannzange zu verwenden, d. h. die Backenelemente 2 spannen das zu bearbeitende Stangematerial fest zwischen sich ein.

## Patentansprüche

1. Zange zum Halten von Stangenmaterial in Drehmaschinen, umfassend mehrere, lose, zusammen im wesentlichen einen rohrförmigen Körper bildenden, im Querschnitt sektorförmigen Backenelemente (2), die je mit einer Teilkegelstumpffläche (4) auf ihrer Außenseite und je mit einer Betätigungsausbildung an ihrem einen Ende versehen sind, wobei die Backenelemente umfangsmäßig zusammengehalten werden und durch zwischen ihnen angeordnete Federkörper (11) voneinander beabstandet sind, **dadurch gekennzeichnet, daß** im Bereich der Teilkegelstumpffläche (4) jedes Backenelementes (2) wenigstens eine von ihr vorstehende, kleine Stützfläche (12) als kraftübertragende Einstellausbildung für das radiale Einstellen der Backenelemente (2) in ihre Arbeitsposition vorgesehen ist.

2. Zange nach Anspruch 1, **dadurch gehennzeichnet, daß** die Seitenringfläche (17) der Betätigungsnut (7) der Backenelemente (2) in bezug auf eine senkrecht durch die Drehachse (10) der Zange (1) verlaufende Ebene (E) innerhalb eines Winkelbereiches (α) von 10 bis 30 ° geneigt verläuft, derart, daß die Neigungslinie (18) jeder Seitenringfläche (17) die Drehachse (10) der Zange, betrachtet von deren Arbeitsseite (20) her. vor der senkrechten Ebene (E) schneidet.

3. Zange nach Anspruch 1 oder 2, **dadurch gekennzeichnet, daß** die kleine Stützfläche (12) im Bereich einer geraden Linie (13) vorgesehen ist, die auf der Teilkegelstumpffläche (4) jedes Backenelementes (2) in dessen Umfangsmitte längsverlaufend gedacht ist.

4. Zange nach Anspruch 3, **dadurch gekennzeichnet, daß** die Stützfläche (12) jedes Backenelementes (2) im Bereich der halben Länge der Teilkegelstumpffläche (4) jedes Backenelementes vorgesehen ist.

5. Zange nach Anspruch 1 oder 2, **dadurch gekennzeichnet, daß** die Stützfläche (12) jedes Backenelementes (2) Langform, Kreisform oder Polygonform aufweist.

6. Zange nach einen der Ansprüche 1 bis 5, **dadurch gekennzeichnet, daß** die Stützfläche (12) jedes Backenelementes (2) an einem vorstehenden Teil (14) ausgebildet ist, das zusammen mit dem übrigen Backenelement ein einstückiges Bauteil bildet.

7. Zange nach einem der Ansprüche 1 bis 5, **dadurch gekennzeichnet, daß** die Stützfläche (12) jedes Backenelementes (2) an einem gesonderten Bauteil (15) ausgebildet ist, daß mit dem Backelement festverbunden ist.

8. Zange nach Anspruch 7, **dadurch gekennzeichnet, daß** das gesonderte Bauteil (15) in einer Vertiefung (16) jedes Backenelementes (2) befestigt ist.

9. Zange nach Anspruch 8, **dadurch gekennzeichnet, daß** das gesonderte Bauteil (15) ein Stiftkörper oder ein Rippenkörper ist.

10. Zange nach Anspruch 3, **dadurch gekennzeichnet, daß** sich die Stützfläche (12) als schmale Fläche im wesentlichen entlang der gesamten Länge der mittigen geraden Linie (13) jedes Backenelementes (2) erstreckt.

11. Zange nach Anspruch 2, **dadurch gekennzeichnet, daß** die Seitenringfläche (17) der Betätigungsnut (7) jedes Backenelementes (2) innerhalb eines Winkelbereiches (a) von 10 bis 20 ° geneigt verläuft.

12. Zange nach Anspruch 2, **dadurch gekennzeichnet, daß** die Seitenringfläche (17) der Betätigungsnut (7) jedes Backenelementes (2) innerhalb eines Winkelbereiches (α) von 12 bis 15 ° geneigt verläuft.

## Claims

1. A collet chuck for holding rod material in lathes, comprising several loose jaw elements (2) which together form an essentially tubular body, are sector-shaped in cross section and in each case are provided with a part truncated cone surface (4) on their outer side and in each case with an actuation formation on their one end, wherein the jaw elements peripherally are held together and are distanced from one another by spring bodies (11) arranged between them, **characterised in that** in the region of the part truncated cone surface (4) of each jaw element (2) there is provided at least one small support surface (12) projecting from said surface as a force transmitting adjustment formation for radially adjusting the jaw elements (2) in their operating position.

2. A collet chuck according to claim 1, **characterised in that** the side ring surface (17) of the actuation groove (7) of the jaw elements (2) with respect to a plane (E) running perpendicularly through the rotational axis (10) of the chuck (1) runs inclined within an angular range (α) of 10 to 30° in a manner such that the inclination line (18) of each side ring surface (17) intersects the rotational axis (10) of the collet chuck, observed from its operating side (20), in front of the perpendicular plane (E).

3. A collet chuck according to claim 1 or 2, **characterised in that** the small support surface (12) is provided in the region of the straight line (13) which is imagined running longitudinally on the part truncated cone surface (4) of each jaw element (2) in the middle of its periphery.

4. A collet chuck according to claim 3, **characterised in that** the support surface (12) of each jaw element (2) is provided in the region of the half of the length of the part truncated cone surface (4) of each jaw element.

5. A collet chuck according to claim 1 or 2, **characterised in that** the support surface (12) of each jaw element (2) has an elongate shape, a circular shape or a polygonal shape.

6. A collet chuck according to one of the claims 1 to 5, **characterised in that** the support surface (12) of each jaw element (2) is formed on a projecting part (14) which together with the remaining jaw element forms a one-piece component.

7. A collet chuck according to one of the claims 1 to 5, **characterised in that** the support surface (12) of each jaw element (2) is formed on a separate component (15) which is rigidly connected to the jaw element.

8. A collet chuck according to claim 7, **characterised in that** the separate component (15) is fastened in a deepening (16) of each jaw element (2).

9. A collet chuck according to claim 8, **characterised in that** the separate component (15) is a pin body or rib body.

10. A collet chuck according to claim 3, **characterised in that** the support surface (12) as a narrow surface extends essentially along the whole length of the middle straight line (13) of each jaw element (2).

11. A collet chuck according to claim 2, **characterised in that** the side ring surface (17) of the actuation groove (7) of each jaw element (2) runs inclined within an angular range (α) of 10 to 20°.

12. A collet chuck according to claim 2, **characterised in that** the side ring surface (17) of the actuation groove (7) of each jaw element (2) runs inclined within an angular range (α) of 12 to 15°.

## Revendications

1. Pince pour maintenir un matériau en forme de barre dans des tours, comprenant plusieurs organes formant mâchoire (2) lâches, présentant en coupe transversale la forme d'un secteur et définissant ensemble sensiblement un corps tubulaire, lesquels organes formant mâchoire sont dotés chacun d'une surface tronconique partielle (4), sur leur face extérieure, et chacun d'une configuration d'actionnement, à l'une de leurs extrémités, les organes formant mâchoire étant tenus ensemble dans le sens circonférentiel et étant maintenus à distance l'un de l'autre par des corps élastiques (11) disposés entre eux, **caractérisée en ce que** dans la région de la surface tronconique partielle (4) de chaque organe formant mâchoire (2), il est prévu au moins une petite surface d'appui (12) dépassant en hauteur de ladite surface tronconique partielle et faisant office de configuration de réglage, transmettrice de force, pour le réglage en direction radiale des organes formant mâchoire (2) dans leur position de travail.

2. Pince selon la revendication 1, **caractérisée en ce que** la surface annulaire latérale (17) de la gorge d'actionnement (7) des organes formant mâchoire (2) est inclinée dans les limites d'une plage angulaire (α) de 10 à 30°, relativement à un plan (E) s'étendant perpendiculairement à l'axe de rotation (10) de la pince (1) de telle manière que la ligne d'inclinaison (18) de chaque surface annulaire latérale (17) coupe l'axe de rotation (10) de la pince en avant du plan perpendiculaire (E) lorsque l'on regarde depuis la face de travail (20) de cette dernière.

3. Pince selon la revendication 1 ou 2, **caractérisée en ce que** la petite surface d'appui (12) est prévue dans la région d'une ligne droite (13) qui est imaginée s'étendant longitudinalement sur la surface tronconique partielle (4) de chaque organe formant mâchoire (2), au milieu de celui-ci dans le sens périphérique.

4. Pince selon la revendication 3, **caractérisée en ce que** la surface d'appui (12) de chaque organe formant mâchoire (2) est prévue au voisinage de la mi-longueur de la surface tronconique partielle (4) de chaque organe formant mâchoire.

5. Pince selon la revendication 1 ou 2, **caractérisée en ce que** la surface d'appui (12) de chaque organe formant mâchoire (2) présente une forme allongée, une forme circulaire ou une forme polygonale.

6. Pince selon l'une des revendications 1 à 5, **caractérisée en ce que** la surface d'appui (12) de chaque organe formant mâchoire (2) est aménagée sur un élément saillant (14) qui forme, conjointement avec la partie restante de l'organe formant mâchoire, un composant en une seule pièce.

7. Pince selon l'une des revendications 1 à 5, **caractérisée en ce que** la surface d'appui (12) de chaque organe formant mâchoire (2) est aménagée sur un composant séparé (15), qui est solidarisé à l'organe formant mâchoire.

8. Pince selon la revendication 7, **caractérisée en ce que** le composant séparé (15) est fixé dans un renfoncement (16) de chaque organe formant mâchoire (2).

9. Pince selon la revendication 8, **caractérisée en ce que** le composant séparé (15) est un corps en forme de broche ou un corps en forme d'ailette.

10. Pince selon la revendication 3, **caractérisée en ce que** la surface d'appui (12) s'étend, sous forme d'une surface étroite, sur sensiblement la longueur entière de la ligne droite médiane (13) de chaque organe formant mâchoire (12).

11. Pince selon la revendication 2, **caractérisée en ce que** la surface annulaire latérale (17) de la gorge d'actionnement (7) de chaque organe formant mâchoire (2) est inclinée dans les limites d'une plage angulaire (α) de 10 à 20°.

12. Pince selon la revendication 2, **caractérisée en ce que** la surface annulaire latérale (17) de la gorge d'actionnement (7) de chaque organe formant mâchoire (2) est inclinée dans les limites d'une plage angulaire (α) de 12 à 15°.
